Europäisches Patentamt

European Patent Office

Office européen des brevets

(19)

(11) Numéro de publication : **0 041 035 B2**

(12) **NOUVEAU FASCICULE DE BREVET EUROPEEN**

(45) Date de publication du nouveau fascicule du brevet : **18.03.92 Bulletin 92/12**

(51) Int. Cl.⁵ : **C08G 63/16, C08G 63/18**

(21) Numéro de dépôt : **81420077.0**

(22) Date de dépôt : **19.05.81**

(54) **Polyesters pour emballages à usage alimentaire et leur procédé d'obtention.**

Le dossier contient des informations techniques présentées postérieurement au dépôt de la demande et ne figurant pas dans le présent fascicule.

(30) Priorité : **20.05.80 FR 8011201**

(43) Date de publication de la demande : **02.12.81 Bulletin 81/48**

(45) Mention de la délivrance du brevet : **21.11.84 Bulletin 84/47**

(45) Mention de la décision concernant l'opposition : **18.03.92 Bulletin 92/12**

(84) Etats contractants désignés : **AT DE FR GB IT NL**

(56) Documents cités :
DD-A- 94 895
DE-A- 2 919 008
FR-A- 2 380 312
JP-A-53 028 676
NL-A- 7 804 764

(56) Documents cités :
CHEMICAL ABSTRACTS, vol. 80, no. 10, 11 mars 1974, page 10, réf. 48531c Columbus, Ohio, US M.I. SIMONOVA et al.: "Preparation of high molecular-weight poly (ethylene terephthalate) by solid-phase polycondensation"
Notices techniques de Hoechst UK Limited "Hoechst Polyester M 81 E"
Progress in Colloid and Polymer Science, vol. 62, pp. 88-92, 1977

(73) Titulaire : **RHONE-POULENC CHIMIE**
**25, quai Paul Doumer**
**F-92408 Courbevoie Cédex (FR)**

(72) Inventeur : **Bonnebat, Claude**
**5, rue Alfred de Musset**
**F-77340 - Pontault-Combault (FR)**
Inventeur : **Roullet, Gilbert**
**337, Citée-St.-Roch**
**F-58500 - Clamecy (FR)**
Inventeur : **Vaginay, Yves**
**43, Avenue Charreyre**
**F-69960 - Corbas (FR)**

(74) Mandataire : **Trolliet, Maurice et al**
**RHONE-POULENC INTERSERVICES Service Brevets Chimie Centre de Recherches de Saint-Fons B.P. 62**
**F-69192 Saint-Fons Cédex (FR)**

EP 0 041 035 B2

## Description

La présente invention concerne un polyester saturé à base d'unités de téréphtalate d'éthylène glycol pour récipients à usage alimentaire. L'invention se rapporte également à son procédé d'obtention.

On sait que les polyesters thermoplastiques constitués de motifs de téréphtalate d'éthyléne glycol constituent des matières premières intéressantes pour le conditionnement de denrées alimentaires sous forme de films, feuilles, récipients et notamment de bouteilles destinées à la conservation de liquides plats ou de boissons gazeuses.

L'une des qualités essentielles à laquelle doit répondre un emballage et plus particulièrement une bouteille est sa transparence et sa brillance. Par étirage à partir de l'état amorphe dans des conditions de biorientation, le polytéréphthalate d'éthylène glycol conserve une bonne transparence tout en bénéficiant d'une phase cristalline orientée qui renforce considérablement ses propriétés mécaniques et permet une réduction de la perméabilité aux gaz. La transparence et la brillance peuvent cependant être affectées par la formation de spherolites cristallins notamment dans le cas de récipients à parois relativement épaisses. La réalisation de bouteilles par injection et/ou extrusion-soufflage passe nécessairement par la réalisation d'une préforme à parois épaisses obtenue par trempe à partir de l'état fondu et la formation de spherolites cristallins au stade de la préforme affecte la transparence de l'objet fini. Il s'est donc revélé avantageux de proposer des grades de polyester ayant une faible vitesse de cristallisation.

Une autre qualité à laquelle doit repondre un emballage en matière polymère est l'absence de tout composé susceptible de migrer dans la denrée alimentaire ou la boisson et d'en altérer le goût ou l'odeur. On sait que les résines polyesters libèrent par dégradation de l'acétaldehyde qui présente une forte odeur et un goût caractéristique et qui se manifeste à des teneurs extrêmement faibles.

Ce problème est particulièrement important pour le conditionnement des eaux minérales. Ainsi les bouteilles en polyester destinées à contenir des eaux minérales gazeuses doivent avoir une teneur en acétaldéhyde dans leur paroi inférieure à 5 ppm (parties par million de polyester en poids/poids) pour un volume compris entre 1 litre et 2 litres si l'on veut s'assurer que dans les conditions de stockage, à des températures pouvant atteindre 45° C, la quantité d'acétaldehyde susceptible de migrer dans le liquide reste inférieure au seuil organoleptique détectable, soit 40-50 ppb (parties par milliard en poids/poids de liquide). L'origine de l'acétaldehyde dans les objets finis dépend à la fois de la quantité résiduelle présente dans le granulé de polyester, avant sa transformation, et de la quantité formée au cours de la transformation à l'état fondu par suite d'une dégradation dans les conditions de cisaillement et de températures requises pour le moulage.

On a déjà proposé divers procédés pour diminuer la teneur et/ou la reformation d'acétaldehyde des résines de polytéréphtalate d'éthylène glycol. D'une manière générale ces procédés décrivent des conditions opératoires au cours des phases de séchage, cristallisation ou post-condensation du précurseur telles qu'elles sont appliquées couramment pour l'obtention de résines de haute viscosité.

Ainsi selon la demande de brevet français publiée 78 23 635 le séchage des copeaux de polyester est effectué à 180-230°C pendant 4 à 12 heures en atmosphère inerte pour abaisser la teneur en acétaldéhyde dans les copeaux à moins de 2,5 ppm. D'aprés la demande de brevet français 79 10 061 on obtient une diminution de la vitesse de formation d'acétaldéhyde par traitement à l'état fondu sous atmosphère inerte du polyester complètement polymérisé.

Selon la demande de brevet français 79 11 981 on cristallise le polymère par chauffage à 180-220° C et la post-condensation est réalisée à une température supérieure à la température de cristallisation.

Le brevet américain 41 54 920 décrit un procédé en deux étapes à partir d'un prépolymère de viscosité intrinsèque 0,1 à 0,3 dl/g selon lequel le prépolymère est d'abord condensé à l'état fondu en couche mince puis post-condensé à l'état solide.

Enfin d'après le demande de brevet français 79 12 337 les pastilles de polyester sont post-condensées et stabilisées par chauffage à 180-220°C durant 2 à 20 heures dans l'air, augmentant la viscosité intrinsèque jusqu'à une valeur comprise entre 0,60 et 0,97 dl/g.

La demanderesse a trouvé que la quantité d'acétaldéhyde présente dans les parois d'un article moulé, et susceptible de migrer, c'est-à-dire la quantité résiduelle présente dans les granulés additionnée à la quantité réformée lors de la transformation à l'état fondu en article moulé ne dépendait pas seulement des conditions de traitement du précurseur (séchage cristallisation et post-condensation) mais était liée d'une part à la qualité intrinsèque du précurseur, obtenu dans la phase initiale de la polycondensation à l'état fondu, et d'autre part à la caractéristique de recristallisation du polymére lors de l'opération de trempe à l'état fondu.

Le précurseur doit en effet contenir le plus petit nombre possible de sites initiateurs d'une dégradation ultérieure: vinylique, carboxylique. Pour un même système catalytique, en fonction des conditions de la polycondensation, les qualités intrinsèques de la résine peuvent être très différentes. La stabilité thermique du précurseur peut se mesurer indirectement par la mesure de la vitesse de reformation d'acétaldéhyde du polymère porté à haute température. Par ailleurs la quantité d'acétaldéhyde reformée est directement liée à la température de mise en oeuvre du matériau et celleci sera d'autant plus élevée que la vitesse de recristallisation sera plus grande lors de la trempe.

La présente invention a donc pour objet un polytéréphtalate d'éthylène glycol ayant des caractéristiques utiles pour le moulage par injection ou extrusion-soufflage d'articles transparents, ainsi qu'un procédé pour l'obtention dudit polytéréphtalate.

Le polytéréphtalate d'éthylène glycol selon l'invention, de viscosité intrinsèque comprise entre 0,65 et 1,05 dl/g et de densité > 1,38, est constitué de 92,5 à 98,5% de motifs téréphtalate d'éthylène et de 1,5 à 7,5% en moles de motifs d'un agent retardateur de cristallisation choisi parmi un ou plusieurs acides polycarboxyliques et/ou alcools polyhydriques, la quantité de di-et/ou tri-éthylène glycol étant limitée à une valeur inférieure a environ 3,5% (moles par moles de restes diacides présents dans la chaîne) et est caractérisé par les propriétés suivantes prises en combinaison:

– teneur résiduelle en acétaldéhyde inférieure à 1,25 ppm,
– vitesse de réformation d'acétaldéhyde à 220° C inférieure à 5 ppm/heure,
– absence de cristallisation visible dans une plaque d'épaisseur au moins égale à 4 mm obtenue par injection du matériau fondu à 280°C dans un moule dont les parois sont maintenues à une température égale à 37°C.

On entend par motifs téréphtalate d'éthyléne également la faible quantité de téréphtalate de di- et tri-éthylène glycol inévitablement formés lors de la polycondensation.

La fabrication des polyesters à partir d'acides dicarboxyliques aromatiques ou de leurs dérivés fonctionnels et de diols aliphatiques par estérification directe ou transestérification puis polycondensation en présence de catalyseurs est un procédé connu. Dans une première étape de réaction l'acide dicarboxylique est estérifié ou son ester diméthylique est transestérifié par le glycol. Dans une seconde étape on procède à la polycondensation de l'ester diglycolique formé. On obtient un polyester de bas poids moléculaire que l'on désignera ci-après par le terme »précurseur« . Pour obtenir des polyesters de poids moléculaire élevé le précurseur est séché, cristallisé puis soumis à une post-condensation à l'état solide ou fondu jusqu'à l'obtention de la viscosité finale désirée.

Pour l'obtention du polytéréphtalate d'éthylène glycol selon l'invention, le procédé est caractérisé en ce que pour la formation du précurseur d'une viscosité intrinséque comprise entre 0,55 et 0,70 dl/g, la polycondensation est réalisée en présence d'au moins un modifiant copolymérisable retardateur de cristallisation en quantité comprise entre 1,5 et 7,5% en moles par rapport à l'ensemble diacide ou diester + retardateur, à une température inférieure à 290°C et est limitée à un degré compris entre 75 et 90% du degré de polycondensation maximal accessible évalué d'après la visvosité intrinsèque du polymère.

Les modifiants copolymérisables retardateurs de cristallisation peuvent être des acides polycarboxyliques aromatiques et/ou aliphatiques et/ou des alcools polyhydriques. On peut utiliser par exemple les acides isophtalique, naphtalène dicarboxylique, adipique, sébacique ou leurs dérivés fonctionnels pouvant former des polyesters. Des exemples de diols sont le néopentyl glycol, l'hexane diol-1,6, le bis-hyddroxyméthyl-1,4 cyclohexane, le diéthylène glycol, le triéthylène glycol. S'agissant du di- et/ou tri-éthylène glycol il est essentiel que la quantité totale qui peut soit être ajoutée, soit résulter de sa formation in situ par déshydratation de l'éthylène glycol en excès reste inférieure à 3,5% en moles par moles de restes diacides engagés dans la chaine. L'emploi de très faibles quantités de composés trifonctionnels acides ou alcools est possible dans la mesure où cette addition n'augmente pas la vitesse de cristallisation du polymère. L'acide isophtalique a été trouvé particulièrement favorable.

Le système catalytique utilisé peut avoir une influence sur la formation de l'acétaldehyde. Il est déconseillé d'utiliser les catalyseurs en quantité excessive. Les composés de l'antimoine comme catalyseur de polycondensation à des teneurs inférieures à 250 ppm (exprimé en poids de métal par rapport à la quantité de tous les constituants) a été trouvé particulièrement favorable.

Le degré de polycondensation du précurseur dépend de facteurs tels que la nature et le taux du système catalytique, les performances de l'appareillage, la température et la pression de la polycondensation. Ce degré de polycondensation peut être déterminé par la mesure de la viscosité intrinséque du polymère. Dans des conditions opératoires données il existe un seuil de polycondensation maximum, au-delà duquel la viscosité ne peut plus être augmentée, les réactions de dégradation prenant une importance prépondérante sur la réaction de polycondensation.

Selon l'un des moyens particuliers essentiel de l'invention la viscosité intrinsèque du précurseur Vlp est limitée à une valeur comprise entre 0,75 et 0,90 de la viscosité maximale possible $Vl_\infty$, c'est-à-dire à la relation:

$$0,75 \, Vl_\infty < Vlp < 0,90 \, Vl_\infty$$

Si la viscosité atteinte est limitée en-dessous de $0,75 \, Vl_\infty$ le procédé n'est pas performant. Si la polycondensation est poursuivie au-delà de la valeur $0,90 \, Vl_\infty$ on observe une augmentation de la vitesse de reformation

EP 0 041 035 B2

en acétaldehyde.

Après cristallisation et séchage du précurseur obtenu selon le procédé de l'invention, la post-condensation peut être réalisée par tout procédé connu pour obtenir une viscosité intrinsèque finale comprise entre environ 0,65 et 1,05. La post-condensation est de préférence réalisée à l'état solide sous vide poussé ou sous gaz inerte entre 190 et 230°C pendant une durée pouvant varier de 5 à 25 heures. Le produit obtenue peut être transformé en copeaux, granulés ou pastilles par des moyens connus.

Les polytéréphtalates obtenus selon l'invention peuvent être moulés en récipients par tous procédés. Ils peuvent être moulés par injection, extrusion, injection-soufflage ou extrusion-soufflage soit directement en un produit fini, soit indirectement en un tube ou préforme qui sera ultérieurement moulé à la forme du récipient souhaitée.

Du fait de leur vitesse de recristallisation réduite lors de la trempe, ils permettent de mouler des articles transparents à parois relativement épaisses tels que des préformes pour bouteilles avec une dégradation minimale de la résine. Ils présentent un intérêt tout particulier pour la réalisation de bouteilles destinées au conditionnement des eaux minérales qui peuvent être stockées pendant une durée prolongée sans altération sensible de goût.

Les exemples qui suivent illustrent l'invention. Il doit être bien entendu qu'ils ne sont pas donnés à titre limitatif et que toutes variantes ou modifications peuvent être apportées sans pour autant sortir du cadre général de la présente invention.

Les méthodes de mesure suivantes ont été utilisées pour caractériser le produit selon l'invention.

– Taux résiduel en acétaldéhyde: AA résiduel. On broie l'échantillon refroidi sous de l'azote liquide en une poudre fine, inférieure à 800 microns. La poudre est chauffée 1h30 à 160°C en ballon fermé sous azote et la quantité d'acétaldéhyde libérée est dosée par chromatographie en phase vapeur (CPV).

– Vitesse de reformation d'acétaldéhyde à 220°C: Cette mesure est effectuée sur la poudre broyée comme précédemment. La poudre est chauffée 30 minutes jusqu'à 220°C de manière à éliminer l'acétaldéhyde résiduel initialement présent. Le ballon est purgé à l'azote et fermé. On prélève un échantillon de gaz aprés 1, 2, 3 heures de chauffage et on dose l'acétaldéhyde sur chaque échantillon par CPV. La quantité totale est divisée par le temps (3 heures) pour donner le nombre de parties en poids d'acétaldéhyde par million en poids de polyester par heure.

– Viscosité intrinsèque VI en dl/g: la mesure est effectuée à 25°C en solution à 1% (poids/volume) dans un mélange phénol/orthochlorophénol 47/53.

– Cristallisation: On plastifie le polymère sec à 290° C de manière à détruire tout germe de cristallisation.

On injecte le produit fondu dans une série de moules dont l'épaisseur varie progressivement pour obtenir des plaques d'épaisseur comprise entre 2 et 5 mm. La température des parois du moule est conditionnée à 37°C. On note à quelle épaisseur e apparait un léger trouble correspondant à un début de cristallisation. Plus l'épaisseure des pièces amorphes, totalement transparentes, est grande, plus la vitesse de recristallisation est faible.

– Teneur en diéthylène glycol (DEG %): L'échantillon est broyé et saponifié par la potasse en solution éthanolique. L'analyse est effectuée par chromatographie gaz en présence d'un étalon interne. Les résultats sont exprimés en moles par rapport aux restes diacides.

Exemple 1

On prépare un précurseur par transestérification à partir d'un mélange de diméthyltéréphtalate, éthylène glycol et polycondensation en présence de 3% d'acide isophtalique (en moles). On utilise un système catalytique à base de manganèse phosphore, antimoine contenant 200 ppm d'antimoine.

On arrête la polycondensation quand la viscosité intrinsèque du précurseur $VI_p$ atteint 0,61 dl/g, la viscosité limite $VI_\infty$ pouvant être amenée jusqu'à une valeur de 0,72 dl/g. Après séchage et cristallisation les granulés sont post-condensés à l'état solide sous 66,66 Pa pendant 12 heures à 217°C pour obtenir une VI de 0,81 dl/g.

| | |
|---|---|
| AA résiduel | 0,9 ppm |
| AA reformation à 220°C | 4 ppm/heure |
| e moulage amorphe | 5 mm |
| DEG% | 1,4 |

Exemple 2

On renouvelle l'exemple 1 à la différence que l'on ajoute 2% d'acide isophtalique.

On arrête la polycondensation à une valeur $VI_p$ de 0,65 dl/g. La $VI_\infty$ est de 0,75 dl/g.

Après post-condensation à l'état solide jusqu'à obtention d'une VI de 0,1 dl/g les granulés présentent les

4

caractéristiques suivantes:

| | |
|---|---|
| AA résiduel | 1,2 ppm |
| AA reformation à 220°C | 4,6 ppm/heure |
| e moulage amorphe | 4,5 mm |
| DEG% | 1,6 |

Exemples comparatifs

Exemple 3

On prépare un homopolymére par transestérification de diméthyltéréphtalate et d'éthylène glycol, puis polycondensation en utilisant le même système catalytique que dans l'exemple précédent. On arrête la poly-condensation à une valeur $VI_p$ égale à 0,60, la $VI_\infty$ étant de 0,72. Le précurseur est traité dans les conditions de l'exemple 1 jusqu'à l'obtention d'une viscosité finale de 0,75 dl/g. On obtient les caractéristiques suivantes:

| | |
|---|---|
| AA résiduel | 1,1 ppm |
| AA reformation à 220°C | 4,2 ppm/heure |
| e moulage amorphe | 3 mm |
| DEG% | 1,3 |

Exemple 4

On répète l'opération de l'exemple 1 (addition de 3% d'acide isophtalique) mais la viscosité $VI_p$ est poussée au maximum possible soit 0,72. Après post-condensation dans les mêmes conditions, on obtient les résultats suivants:

| | |
|---|---|
| AA résiduel | 3 ppm |
| AA reformation à 220°C | 20 ppm/heure |
| e moulage amorphe | 5 mm |

Exemple 5

On reproduit l'exemple 1 en ajoutant 4% en moles de diéthylène glycol aux produits réactionnels. On arrête la polycondensation à une valeur de $VI_p$ à 0,60 dl/g - $VI_\infty$ est de 0,70 dl/g. Après séchage, cristallisation et post-condensations dans les conditions décrites on obtient les résultats suivants:

| | |
|---|---|
| AA résiduel | 1,9 ppm |
| AA reformation à 220°C | 9 ppm/heure |
| e moulage amorphe | 4,5 mm |
| DEG % | 3,72 |

Les polyesters obtenus selon les exemples 1 à 5 sont utilisés pour la fabrication de bouteilles biorientées.

A cet effet les granulés sont séchés à moins de 50 ppm d'humidité et injectés à l'état fondu à l'aide d'une presse à injection au travers d'un moule de préformes à canaux chauds de manière à obtenir des préformes amorphes de 47 g, d'une épaisseur de parois de 3,8mm. On mesure la teneur en acétaldéhyde sur un échantillon prélevé sur la paroi de la préforme. Pour chacun des essais on note la température d'injection du matériau et le % d'AA mesuré sur la préforme (poids/poids polyester).

| Exemples | T° injection en °C | AA en ppm |
|---|---|---|
| 1 | 285 | 3,5 |
| 2 | 290 | 4,5 |
| 3 | 310 | 8 |
| 4 | 285 | 6 |
| 5 | 300 | 9,1 |

Les préformes sont soufflées à la température de biorientation en bouteilles de 1,5 litre de capacité. Les bouteilles sont remplies d'eau minérale gazeuse et stockées à 45°C. Un test organoleptique effectué comparativement à une eau minérale stockée en bouteille de verre ne révèle aucune modification de goût pouvant résulter d'une migration de l'acétaldéhyde après un mois de stockage pour la bouteille obtenue à partir du polytéréphtalate selon les exemples 1 et 2. Dans tous les autres cas, on détecte une altération sensible du goût à partir de 8 jours de stockage, ce qui rend l'eau minérale impropre à la consommation.

**Revendications**

**Revendications pour les Etats contractants suivants : DE, FR, GB, IT, NL**

1. Procédé de préparation de polytéréphtalate d'éthylène glycol par estérification ou transestérification de l'acide téréphtalique ou de ses dérivés fonctionnels par l'éthylène glycol et polycondensation en présence de catalyseurs, jusqu'à obtention d'un précurseur puis post-condensation du précurseur jusqu'à une viscosité intrinsèque comprise entre 0,65 et 1,05 dl/g, caractérisé en ce que, pour la formation du précurseur d'une viscosité intrinsèque comprise entre environ 0,55 et environ 0,70 dl/g, la polycondensation est réalisée en présence d'au moins un modifiant copolymérisable retardateur de cristallisation choisi parmi un ou plusieurs acides polycarboxyliques et/ou alcools polyhydriques en quantité comprise entre 1,5 et 7,5 % (en moles par rapport à l'ensemble diacide ou diester + retardateur), à une température inférieure à 290°C et est limitée à un degré compris entre 75 et 90 % du degré de polycondensation maximal accessible évalué d'après la viscosité intrinsèque, la quantité de di- et/ou de triéthylèneglycol étant limitée à une valeur inférieure à 3,5 % [en moles par rapport au(x) diacide(s) engagé(s)].

2. Procédé selon la revendication 1, caractérisé en ce que le modifiant copolymérisable retardateur de cristallisation est l'acide isophtalique, l'acide naphtalène dicarboxylique, l'acide adipique, l'acide sébacique, le néopentylglycol, l'hexanediol-1,6, le bis-hydroxyméthyl-1,4 cyclohexane, le diéthylèneglycol, le triéthylèneglycol ou un mélange de ces composés.

3. Procédé selon l'une quelconque des revendications 1 et 2, caractérisé en ce que l'on utilise un catalyseur de polycondensation à base d'antimoine à des teneurs inférieures à 250 ppm.

4. Polytéréphtalate d'éthylèneglycol ayant une viscosité intrinsèque comprise entre 0,65 et 1,05 dl/g et une densité supérieure à 1,38, constitué de 92,5 à 98,5 % de motifs téréphtalate d'éthylène et de 1,5 à 7,5 % en moles de motifs d'un agent retardateur de cristallisation choisi parmi un ou plusieurs acides polycarboxyliques et/ou alcools polyhydriques, la quantité de di- et/ou triéthylèneglycol étant limitée à une valeur inférieure à environ 3,5 % (moles par mole de restes diacides présents dans la chaîne), ledit polytéréphtalate d'éthylène glycol étant susceptible d'être obtenu par le procédé selon l'une quelconque des revendications 1 à 3 précédentes, caractérisé par les propriétés suivantes prises en combinaison :
   – teneur résiduelle en acétaldéhyde inférieure à 1,25 ppm ;
   – vitesse de reformation d'acétaldéhyde à 220°C inférieure à 5 ppm/heure ;
   – absence de cristallisation visible dans une plaque d'épaisseur au moins égale à 4 mm obtenue par injection du matériau fondu à 280°C dans un moule dont les parois sont maintenues à une température égale à 37°C.

5. Emploi du polytéréphtalate selon la revendication 4 pour le moulage d'articles d'emballages destinés au conditionnement de denrées alimentaires.

6. Emploi du polytéréphtalate selon la revendication 4 pour la fabrication de bouteilles biorientées destinées au conditionnement des eaux minérales plates ou gazeuses.

**Revendications pour l'Etat contractant suivant : AT**

1. Procédé de préparation de polytéréphtalate d'éthylène glycol présentant les propriétés suivantes prises en combinaison :
   – teneur résiduelle en acétaldéhyde inférieure à 1,25 ppm ;
   – vitesse de reformation d'acétaldéhyde à 220°C inférieure à 5 ppm/heure ;
   – absence de cristallisation visible dans une plaque d'épaisseur au moins égale à 4 mm obtenue par injection du matériau fondu à 280°C dans un moule dont les parois sont maintenues à une température égale à 37°C, ledit procédé étant conduit par estérification ou transestérification de l'acide téréphtalique ou de ses dérivés fonctionnels par l'éthylène glycol et polycondensation en présence de catalyseurs, jusqu'à obtention d'un précurseur puis post-condensation du précurseur jusqu'à une viscosité intrinsèque comprise entre 0,65 et 1,05 dl/g, caractérisé en ce que, pour la formation du précurseur d'une viscosité intrinsèque comprise entre environ 0,55 et environ 0,70 dl/g, la polycondensation est réalisée en présence d'au moins un modifiant copolymérisable retardateur de cristallisation choisi parmi un ou plusieurs acide polycarboxyliques et/ou alcools polyhydriques en quantité comprise entre 1,5 et 7,5 % (en moles par rapport à l'ensemble diacide ou diester + retardateur), à une température inférieure à 290°C et est limitée à un degré compris entre 75 et 90 % du degré de polycondensation maximal accessible évalué d'après la viscosité intrinsèque, la quantité de di- et/ou de triéthylèneglycol étant limitée à une valeur inférieure à 3,5 % [en moles par rapport au(x) diacide(s) engagé(s)].

2. Procédé selon la revendication 1, caractérisé en ce que le modifiant copolymérisable retardateur de cristallisation est l'acide isophtalique, l'acide naphtalène dicarboxylique, l'acide adipique, l'acide sébacique, le néopentylglycol, l'hexanediol-1,6, le bis-hydroxyméthyl-1,4 cyclohexane, le diéthylèneglycol, le triéthylèneglycol ou un mélange de ces composés.

3. Procédé selon l'une quelconque des revendications 1 et 2, caractérisé en ce que l'on utilise un catalyseur de polycondensation à base d'antimoine à des teneurs inférieures à 250 ppm.

4. Emploi du polytéréphtalate obtenu selon le procédé décrit dans l'une quelconque des revendications 1 à 3 pour le moulage d'articles d'emballages destinés au conditionnement de denrées alimentaires.

5. Emploi du polytéréphtalate obtenu selon le procédé décrit dans l'une quelconque des revendications 1 à 3 pour la fabrication de bouteilles biorientées destinées au conditionnement des eaux minérales plates ou gazeuses.

## Claims

### Claims for the following Contracting States : DE, FR, GB, IT, NL

1. Process for the preparation of poly(ethylene glycol terephthalate) by esterification or transesterification of terephthalate acid or of its functional derivatives by means of ethylene glycol, and polycondensation in the presence of catalysts, until a precursor is obtained, followed by post-condensation of the precursor until an intrinsic viscosity of between 0.65 and 1.05 dl/g is reached, characterised in that, to form the precursor having an intrinsic viscosity of between about 0.55 and about 0.70 dl/g, the polycondensation is carried out in the presence of at least one copolymerisable modifier which is a crystallisation retarder, chosen from among one or more polycarboxylic acids and/or polyhydric alcohols in an amount of between 1.5 and 7.5% (in moles relative to the combination of diacid or diester + retarder), at a temperature below 290°C, and is limited to a degree of between 75 and 90% of the maximum attainable degree of polycondensation as evaluated from the intrinsic viscosity, the amount of diethylene glycol and/or triethylene glycol being limited to a value of less than 3.5% (in moles relative to the diacid or diacid employed).

2. Process according to Claim 1, characterised in that the copolymerisable modifier which is a crystallisation retarder is isophthalic acid, naphthalenedicarboxylic acid, adipic acid, sebacic acid, neopentyl glycol, hexane-1,6-diol, 1,4-bis-hydroxymethyl-cyclohexane, diethylene glycol, triethylene glycol or a mixture of these compounds.

3. Process according to either of Claims 1 and 2, characterised in that a polycondensation catalyst based on antimony is used, in contents of less than 250 ppm.

4. Poly(ethylen glycol terephthalate) having an intrinsic viscosity of between 0.65 and 1.05 dl/g and a density greater than 1.38, consisting of 92.5 to 98.5% of ethylene terephthalate units and 1.5 to 7.5 mole % of units of a crystallisation retarder chosen from among one or more polycarboxylic acids and/or polyhydric alcohols, the amount of diethylene glycol and/or triethylene glycol being limited to a value less than about 3.5% (in moles per mole of diacid residues present in the chain), the said poly(ethylene glycol terephthalate) being obtainable by the process according to any one of the above Claims 1 to 3, characterised by the following properties, taken in combination:
  – a residual acetaldehyde content of less than 1.25 ppm;
  – a rate of reformation of acetaldehyde at 220°C of less than 5 ppm/hour; and
  – absence of visible crystallisation in a plate of at least 4 mm thickness obtained by injecting the molten material at 280°C into a mould whose walls are kept at a temperature of 37°C.

5. Use of the polyterephthalate according to Claim 4 for the moulding of packaging articles intended for the packaging of foodstuffs.

6. Use of the polyterephthalate according to Claim 4 for the manufacture of bioriented bottles intended for the packaging of still or sparkling mineral waters.

**Claims for the following Contracting States : AT**

1. Process for the preparation of poly(ethylene glycol terephthalate) having the following properties taken in combination:
– a residual acetaldehyde content of less than 1.25 ppm;
– a rate of reformation of acetaldehyde at 220°C of less than 5 ppm/hour; and
– absence of visible crystallisation in a plate of at least 4 mm thickness obtained by injecting the molten material at 280°C into a mould whose walls are kept at a temperature of 37°C, the said process being carried out by esterification or transesterification of terephthalic acid or of its functional derivatives by means of ethylene glycol, and polycondensation in the presence of catalysts, until a precursor is obtained, followed by post-condensation of the precursor until an intrinsic viscosity of between 0.65 and 1.05 dl/g is reached, characterised in that, to form the precursor having an intrinsic viscosity of between about 0.55 and about 0.70 dl/g, the polycondensation is carried out in the presence of at least one copolymerisable modifier which is a crystallisation retarder, chosen from among one or more polycarboxylic acids and/or polyhydric alcohols in an amount of between 1.5 and 7.5% (in moles relative to the combination of diacid or diester + retarder), at a temperature below 290°C, and is limited to a degree of between 75 and 90% of the maximum attainable degree of polycondensation as evaluated from the intrinsic viscosity, the amount of diethylene glycol and/or triethylene glycol being limited to a value of less than 3.5% [in moles relative to the diacid or diacids employed].

2. Process according to Claim 1, characterised in that the copolymerisable modifier which is a crystallisation retarder is isophthalic acid, naphthalenedicarboxylic acid, adipic acid, sebacic acid, neopentyl glycol, hexane-1,6-diol, 1,4-bis-hydroxymethyl-cyclohexane, diethylene glycol, triethylene glycol or a mixture of these compounds.

3. Process according to either of Claims 1 and 2, characterised in that a polycondensation catalyst based on antimony is used, in contents of less than 250 ppm.

4. Use of the polyterephthalate obtained according to the process described in any one of Claims 1 to 3 for the moulding of packaging articles intended for the packaging of foodstuffs.

5. Use of the polyterephthalate obtained according to the process described in any one of Claims 1 to 3 for the manufacture of bioriented bottles intended for the packaging of still or sparkling mineral waters.

**Patentansprüche**

**Patentansprüche für folgende Vertragsstaaten : DE, FR, GB, IT, NL**

1. Verfahren zur Herstellung von Polyäthylenglykolterephthalat durch Veresterung oder Umesterung von Terephthalsäure oder ihren funktionellen Derivaten mittels Äthylenglykol und Polykondensation in Gegenwart von Katalysatoren, bis man einen Vorläufer erhält, und anschließende Nachkondensation des Vorläufers bis zu einer Intrinsic-Viskosität von 0,65 bis 0,05 dl/g, dadurch gekennzeichnet, daß die Polykondensation zur Bildung des Vorläufers mit einer Intrinsic-Viskosität von etwa 0,55 bis etwa 0,70 dl/g in Gegenwart zumindest eines modifizierenden, copolymerisierbaren Kristallisationsverzögerers, ausgewählt aus einer oder mehreren Polycarbonsäuren und/oder mehrwertigen Alkoholen, in einer Menge zwischen 1,5 und 7,5 % (in mol, bezogen auf die Gesamtheit Disäure bzw. Diester + Verzögerer) bei einer Temperatur unterhalb 290°C ausgeführt und auf einen Grad von 75 bis 90 % des maximal erreichbaren Polykondensationsgrades, berechnet nach der Intrinsic-Viskosität, begrenzt wird, wobei die Menge an Di- und/oder Triäthylenglykol auf einen Wert kleiner als 3,5 % [in mol, bezogen auf eingesetzte Disäure(n)] begrenzt ist.

2. Verfahren nach Anspruch 1, dadurch gekennzeichnet, daß der modifizierende Copolymerisierbare Kristallisationsverzögerer Isophthalsäure, Naphtahlindicarbonsäure, Adipinsäure, Sebacinsäure, Neopentylglykol, 1,6-Hexandiol, 1,4-Bis-hydroxymethyl-cyclohexan, Diäthylenglykol, Triäthylenglykol oder eine Mischung dieser Verbindungen ist.

3. Verfahren nach einem der Ansprüche 1 und 2, dadurch gekennzeichnet, daß man einen Polykondensationskatalysator auf Basis von Antimon mit Gehalten unterhalb 250 ppm verwendet.

4. Polyäthylenglykolterephthalat mit einer Intrinsic-Viskosität zwischen 0,65 und 1,05 dl/g und einer Dichte größer als 1,38, bestehend aus 92,5 bis 98,5 % Äthylenterephthalat-einheiten und 1,5 bis 7,5 mol-% Einheiten eines Kristallisationsverzögerers, ausgewählt aus einer oder mehreren Polycarbonsäuren und/oder mehrwertigen Alkoholen, wobei die Menge an Di- und/oder Triäthylenglykol auf einen Wert kleiner als etwa 3,5 % (mol pro mol in der Kette vorhandener Disäurereste) begrenzt ist, welches Polyäthylenglykolterephthalat nach dem Verfahren nach einem der vorhergehenden Ansprüche 1 bis 3 herstellbar ist, gekennzeichnet durch die Kombination folgender Eigenschaften:
- Restgehalt an Acetaldehyd kleiner als 1,25 ppm;
- Geschwindigkeit der Nachbindung von Acethyldehyd bei 220°C geringer als 5 ppm/Stunde;
- Abwesenheit schitbarer Kristallisation in einer Platte mit einer Dicke von zumindest 4 mm, erhalten durch Einspritzen des geschmolzenen Materials bei 280°C in eine Form, deren Wände bei einer Temperatur von 37°C gehalten werden.

5. Verwendung des Polyterephthalats nach Anspruch 4 zum Formen von Verpackungen, die zur Aufnahme von Lebensmitteln bestimmt sind.

6. Verwendung des Polyterephthalats nach Anspruch 4 zur Herstellung von biorientierten Flaschen, die zur Aufnahme von ruhigen oder gashaltigen Mineralwässern bestimmt sind.

**Patentansprüche für folgenden Vertragsstaat : AT**

1. Verfahren zur Herstellung von Polyäthylenglykolterephthalat, das die Kombination folgender Eigenschaften aufweist:
- Restgehalt an Acetaldehyd kleiner als 1,25 ppm;
- Geschwindigkeit der Nachbildung von Acetaldehyd bei 220°C geringer als 5 ppm/Stunde;
- Abwesenheit sichtbarer Kristallisation in einer Platte mit einer Dicke von zumindest 4 mm, erhalten durch Einspritzen des geschmolzenen Materials bei 280°C in eine Form, deren Wände bei einer Temperatur von 37°C gehalten werden, welches Verfahren ausgeführt wird durch Veresterung oder Umesterung von Terephthalsäure oder ihren funktionellen Derivaten mittels Äthylenglykol und Polykondensation in Gegenwart von Katalysatoren, bis man einen Vorläufer erhält, und anschließende Nachkondensation des Vorläufers bis zu einer Intrinsic-Viskosität von 0,65 bis 1,05 dl/g, dadurch gekennzeichnet, daß die Polykondensation zur Bildung des Vorläufers mit einer Intrinsic-Viskosität von etwa 0,55 bis etwa 0,70 dl/g in Gegenwart zumindest eine modifizierenden, copolymerisierbaren Kristallisationsverzögerers, ausgewählt aus einer oder mehreren Polycarbonsäuren und/oder mehrwertigen Alkoholen, in einer Menge zwischen 1,5 und 7,5 % (in mol, bezogen auf die Gesamt-heit Disäure bzw. Diester + Verzögerer) bei einer Temperatur unterhalb 290°C ausgeführt und auf einen Grad von 75 bis 90 % des maximal erreichbaren Polykondensationsgrades, berechnet nach der Intrinsic-Viskosität, begrenzt wird, wobei die Menge an Di- und/oder Triäthylenglykol auf einen Wert kleiner als 3,5 % [in mol, bezogen auf eingesetzte Disäure(n)] begrenzt ist.

2. Verfahren nach Anspruch 1, dadurch gekennzeichnet, daß der modifizierbaren Copolymerisierbare Kristallisationsverzögerer Isophthalsäure, Naphthalindicarbonsäure, Adipinsaüre, Sebacinsäure, Neopentylglykol, 1,6-Hexandiol, 1,4-Bis-hydroxymethyl-cyclohexan, Diäthylenglykol, Triäthylenglykol oder eine Mischung dieser Verbindungen ist.

3. Verfahren nach einem der Ansprüche 1 und 2, dadurch gekennzeichnet, daß man einen Polykondensationskatalysator auf Basis von Antimon mit Gehalten unterhalb 250 ppm verwendet.

4. Verwendung des nach dem in einem der Ansprüche 1 bis 3 beschriebenen Verfahren erhaltenen Polyterephthalats zum Formen von Verpackungen, die zur Aufnahme von Lebensmitteln bestimmt sind.

5. Verwendung des nach dem in einem der Ansprüche 1 bis 3 beschriebenen Verfahren erhaltenen Polyterephthalats zur Herstellung von biorientierten Flaschen, die zur Aufnahme von ruhigen oder gashaltigen Mineralwässern bestimmt sind.